# EUROPEAN PATENT SPECIFICATION

(11) **EP 2 950 609 B1**
(45) Date of publication and mention of the grant of the patent: **23.06.2021**
(21) Application number: 15170165.3
(22) Date of filing: 01.06.2015
(51) Int. Cl.: H05B 1/02, A47J 27/10, H05B 3/80

(54) **EVENT TRACKING PRECISION SOUS VIDE COOKER DEVICE**
EREIGNISVERFOLGENDE VAKUUMGARPRÄZISIONSKOCHVORRICHTUNG
PRÉCISION DE SUIVI D'ÉVÉNEMENTS DE DISPOSITIF CUISEUR SOUS VIDE

(30) Priority: 30.05.2014 US 201462005844 P; 19.09.2014 US 201414491961
(43) Date of publication of application: 02.12.2015
(73) Proprietor: Anova Applied Electronics, Inc., San Francisco, CA 94105 (US)
(72) Inventor: Wu, Jeff, Stafford, TX 77477 (US)
(74) Representative: Electrolux Group Patents

(56) References cited:
- WO-A2-01/52478
- GB-A- 2 260 002
- US-A1- 2008 066 624
- US-A1- 2013 220 143

## Description

### FIELD OF TECHNOLOGY

The present disclosure relates generally to food cooking devices, and more specifically, to precision temperature control water bath heaters and water pumping heating circulator appliance for cooking food in water.

### BACKGROUND

Sous-vide is a method of cooking food in highly precise temperature environment in a water bath for longer than normal cooking times at an accurately regulated temperature much lower than normally used for cooking, typically around 55 °C (113 °F) to 85 °C (185 °F) for meats and higher for vegetables.

However food safety is a paramount concern when dealing with sous-vide food because food is never cooked above boiling point and being cooked at lower temperatures leading to risks of food poisoning if food is not prepared correctly.

### INVENTION

The invention is a fluidic temperature control device according to claim 1.

### BRIEF DESCRIPTION OF THE DRAWINGS

In order to describe a manner in which features of the disclosure can be obtained, reference is made to specific embodiments that are illustrated in the appended drawings. Based on an understanding that these drawings depict only example embodiments of the disclosure and are not intended to be limiting of scope, the principles herein are described and explained.

In order to describe a manner in which features of the disclosure can be obtained, reference is made to specific embodiments that are illustrated in the appended drawings. Based on an understanding that these drawings depict only example embodiments of the disclosure and are not intended to be limiting of scope, the principles herein are described and explained with additional specificity and detail through the use of the accompanying drawings in which:
FIG. 1 illustrates a fluidic temperature control device in accordance with an example embodiment;
FIG. 2 illustrates a fluidic temperature control device in accordance with an example embodiment;
FIG. 3 illustrates a fluidic temperature control device in accordance with an example embodiment;
FIG. 4 is a cross-sectional view illustrating a fluidic temperature control device in accordance with an example embodiment;
FIGS. 5-6 illustrates a clamping mechanism for a fluidic temperature control device in accordance with an example embodiment;
FIG. 7 is a cross-sectional view illustrating a fluidic temperature control device in accordance with an example embodiment; and
FIG. 8 illustrates a block diagram of an example fluidic temperature control device in accordance with an example embodiment.

### DETAILED DESCRIPTION

Various embodiments of the disclosure are discussed in detail below. While specific implementations are discussed, it should be understood that this is done for illustration purposes only. A person skilled in the relevant art will recognize that other components and configurations may be used without departing from the scope of the disclosure.

Several definitions that apply throughout this document will now be presented. "Circulating" means agitating, blending or mixing of one or more fluids. Hence a "circulator" is a device, which can be configured to agitate, blend or mix a fluid. Fluids will be understood to comprise liquids. "Coupled" is defined as connected, whether directly or indirectly through intervening components and is not necessarily limited to physical connections. Coupled devices are devices, which are in signal communication with one another. "Connected" means directly connected or indirectly connected. "Processor" can mean one more multiple computing arrays.

Broadly speaking, this disclosure relates to sous-vide circulator cookers and cooking ranges for home sous-vide cooking. The disclosed devices are particularly suited for use in home kitchens, however, the devices are not limited to home kitchens and can be used in commercial environments.

The terms sous-vide, circulator, circulator cooker, fluidic temperature control device, and cooker are used interchangeably throughout this specification and each refers to a device configured to cook food in temperature controlled water bath.

In at least one embodiment, a fluidic temperature control device can have one or more turn-able or rotatable information displays. The display can be located on the top the cooker and can be configured to keep electronics housed therein away from steam, water and heat and to enable easy viewing from a plurality of different angles.

In at least one embodiment, a fluidic temperature control device can include a detachable skirt which enables cleaning of the skirt and cleaning of a heater, air pump, and/or water pump covered by the skirt. In at least one embodiment, the removable skirt can also expose the water pump impellers enabling a user to clean out food and debris. In at least one embodiment the skirt can be removed without tools. In at least one embodiment the skirt can be stainless steel, aluminum and/or plastic.

In at least one embodiment a fluidic temperature control device can have a water proof submersible pump in which the motor can be located under water, at the water line, or above water, with inflow and outflow lines. In at least one embodiment, the submersible pump can also be opened and/or accessed without tools for cleaning. In at least one embodiment, the fluidic temperature control device can be configured such that one or more motors of the device can be easily removed for cleaning or replacement.

In another embodiment, the entire circulator system can be sealed and can be submersed into water whether purposely or by accident, without damaging any components of the circulator system.

In at least one embodiment, a fluidic temperature control device can include a housing that defines the shape or form of the device. The housing can internally enclose and support various electrical components (for example, motors, fans, and/or electronics). In at least one embodiment, the housing can be cylindrical. In another embodiment, the housing can be a shape other than cylindrical, for example, rectangular, circular, square, or oval.

In at least one embodiment, a fluidic temperature control device for sous-vide cooking can include an upper portion including a controller, a display device and an input device coupled to the controller; a middle portion connected to the upper portion, the middle portion housing a motor coupled to the controller; a lower portion connected to the middle portion, the lower portion housing a fluid agitation device coupled to the motor, a heating element coupled to the controller, and the lower portion configured for at least partial immersion in a fluid. In at least one embodiment, the controller can be located in a cooking range. In at least one embodiment, the heating element is located in a cooking range.

In at least one embodiment, a fluidic temperature control device can include a clamp that enables an operator to secure the fluidic temperature control device to a container. In at least one embodiment, the clamp or other securement device can be configured to enable the height of the cooker to be adjusted with respect to the water bath or the chamber containing the bath, (for example, a cooking pot). In at least one embodiment, the sous-vide cooker can have a ring clamp that enables an operator to turn the entire system to vector the pump output or to turn the system for better display viewing angle.

In at least one embodiment, components of a fluidic temperature control device can be controlled by a remote device, for example, a phone, a server, a tablet, a Personal Computer (PC) or other electronic device. The remote device can be wirelessly and communicatively coupled to the cooker, for example, by Wi-fi, Bluetooth, Near Field Communication (NFC), short-range wireless or other similar system capable of sending and receiving data. In at least one embodiment, the fluidic temperature control device or the remote device controlling the fluidic temperature control device can be configured to wirelessly transmit information about cooking operations, such as a warning that additional water is required in the chamber cooking the food, or an alert indicating that cooking has been completed. In at least one embodiment, a fluidic temperature control device can receive recipe specifications from the remote device. The specifications can then direct the cook time, water pump speed, and cook temperature of the device.

In at least one embodiment, the fluidic temperature control device can include a memory storage unit. The memory storage unit can be used to store information such as favorite recipes and cooking parameters for certain foods. In at least one embodiment, a fluidic temperature control device can store a plurality of recipe specifications and user generated data files. Users of the device can recall recipe specifications from an internal recipe book. In at least one embodiment, the sous-vide circulator cooker can categorize stored recipe specifications and generated data files which can be searchable.

In at least one embodiment, a fluidic temperature control device can be configured to communicate with a wireless thermometer which can be placed in a bag or other suitable container containing food being cooked by the cooker, proximate the food. A thermometer located proximate the food can enable the cooker to have extremely accurate information about the temperature of the food being cooked. Accurate information regarding food temperature can enhance the quality of the cooked food and can aid in ensuring the food is properly and thoroughly cooked (thereby ensuring food safety). In at least one embodiment, the wireless thermometer can be inductively rechargeable.

In at least one embodiment, fluidic temperature control device can be constructed to protect electronic components of the device from environmental factors associated with cooking, for example, high temperatures, water, and steam. In at least one embodiment, one or more portions of the fluidic temperature control device can dynamically change color depending on operational state of the device. In at least one embodiment, the portions of the sealed housing are configured to change color and to provide information regarding an operational state of the device.

In at least one embodiment, the upper portion of the fluidic temperature control device can be configured to protect the controller, display device and input device from steam during use. In at least one embodiment, the agitation device can be an impeller, a propeller, a rotatable blade, a water pump or an air pump.

In at least one embodiment, the lower portion of the fluidic temperature control device or housing can be composed of at least stainless steel, aluminum or plastic, and is removable without tools. In at least one embodiment, the lower portion can contain slits or openings running along at least a portion of a length of the lower portion. In at least one embodiment, the lower portion can be removable from the middle portion and removal of the middle portion exposes the agitation device. In at least one embodiment, the upper portion of the fluidic temperature control device can be rotatable with respect to the middle portion.

In at least one embodiment, the heating element can be proximate the agitation device. Additionally, the heating element can be housed substantially within the agitation device. In at least one embodiment, the heating element can be located in a cooking range. In at least one embodiment, the controller can be configurable to control the temperature of the heating element. In at least one embodiment, the controller can be configurable to receive data inputted via the input device, the data comprising control commands to control the temperature of the heating element. In at least one embodiment, the controller can be located in the fluidic temperature control device. In at least one embodiment, the controller can be located in the cooking range. At least one embodiment of a fluidic temperature control device for sous-vide cooking can include an upper portion including a turn-able display and an input device coupled to the microprocessor controller; a middle portion connected to the upper portion, the middle portion housing a temperature controller controlled by the microprocessor; and a lower portion connected to the middle portion. The lower portion can house or encase a submersible fluid agitation device including impellers and motor, and a heating element coupled to the temperature controller, the lower portion configured for at least partial immersion in a fluid.

In at least one embodiment, the upper portion and middle portion can be sealed, thereby preventing water entry, thereby protecting electronics, the display and other electrical devices within the fluidic temperature control device. In at least one embodiment, the agitation device can be wholly or partially submersible. The agitation device can include a pump system having a motor and an impeller. The agitation device can also comprise a rotatable impeller blade. In at least one embodiment, the agitation device can also comprise a submersible pump.

In at least one embodiment, the lower portion can be configured to be removable from the middle portion such that removal of the lower portion exposes the agitation device and heaters. In at least one embodiment, the middle portion can have two adjustable electrodes that can sense the water level. In at least one embodiment, the lengths of the electrodes can be adjustable to enable detection of different water levels. In at least one embodiment, the electrodes can be configurable with attachments that enable adjustment of a length of the electrodes.

In at least one embodiment, the controller can be configurable to receive data inputted via the input device, the data comprising control commands to control the temperature of the heating element. In at least one embodiment, the temperature controller is configurable to control the temperature of the heating element. In at least one embodiment, the heating element is located proximate the agitation device. In at least one embodiment, the heating element is located in a cooking range.

At least one embodiment of a fluidic temperature control device can comprise a controller located in a sealed housing; a submersible pump connected to the sealed controller; adjustable electrodes to detect water level; and a ring clamp enabling the device to be turned.

In at least one embodiment, the entire device can be submersed in water without negatively impacting the operation of the system. In at least one embodiment, the submersible pump can be opened without tools to expose the impeller blades. In at least one embodiment, the submersible pump can include a barb located on the pump outlet containing a tube receiver.

In at least one embodiment, a fluidic temperature control device used for sous-vide cooking can store one or more arrays of data. The arrays can be indexed to include device events, for example temperatures, on/off events, power loss events and error events.

In at least one embodiment, a fluidic temperature control device used for sous-vide cooking can interpret data and/or can send data to a remote computing device for interpretation. The interpretations can include comparison to and against data points or data arrays for detecting possible corrective action. The fluidic temperature control device can further provide corrective action based on fluidic temperature control device settings and data arrays. The corrective action can be automatic, user initiated, or user approved.

In at least one embodiment, a fluidic temperature control device can include a wireless receiver/transmitter to send notifications and/or alerts to a phone, tablet, PC, or any other device capability of receiving and/or transmitting wireless signals, or a short-range wireless antenna, Wi-Fi, Bluetooth, NFC, or any other method of wireless communication.

In at least one embodiment, the fluidic temperature control device can automatically self-restart based on device events. For example, if a temperature event occurs were the device cannot reach a determined temperature the device can restart. In at least one embodiment, the device can self-restart if a preset or user determined safety parameters are reached and/or exceeded.

In at least one embodiment, a fluidic temperature control device includes a battery configured to enable operation of the device under a loss of power condition, a processor configured to generate an event in response to the loss of power condition, and a communication module configured to transmit the event to a remote device. The communication module can be configured to receive an appropriate action from the remote device. The processor configured to apply the appropriate action to the device.

In at least one embodiment, the processor monitors and stores in a memory one or more events of the device. The processor can alert users of the event by rendering a message on a display of the device, an audible alarm, or transmitting a message from the communication module.

In at least one embodiment, the processor can be programmed with preset temperature safety limits for specific foods. In at least one embodiment, the processor determines if an actual temperature at the device is outside a threshold of the preset temperature safety limit; and generating an event if the actual temperature is outside the threshold. In at least one embodiment, the processor can calculate a projected time the device will be running at a temperature danger point and generates an alert of the project time. In at least one embodiment, the projected time can be calculated by an actual temperature of the device, estimate heat-up times by heat capacity and calculated cool-down times by heat capacity.

In at least one embodiment, the fluidic temperature control device can also include a memory storage unit containing one or more arrays of temperature cook times. The processor configured to compare the arrays of temperature cook times with actual cook time data, and issue an alert when the arrays of temperature cook times are different than the actual cook time.

In at least one embodiment, the fluidic temperature control device can include a user-activated tamper proof feature that locks access to the fluidic temperature control device settings.

In at least one embodiment, the processor can restart the device after a power loss event when a preprogrammed safety limit is exceeded. In at least one embodiment, the processor restarts the device after the power loss event when one or more internal event arrays are determined.

In at least one embodiment, the processor compares the one or more internal event array with one or more event arrays received from the remote device to determine the appropriate action.

In at least one embodiment, the fluidic temperature control device can calculate a time to finish cooking after a power loss event. In at least one embodiment the fluidic temperature control device can be a circulator cooker. In at least one embodiment the fluidic temperature control device can be a water baths type of device. In at least one embodiment the fluidic temperature control device can be a steam oven and/or combination oven and/or hot plate types of devices.

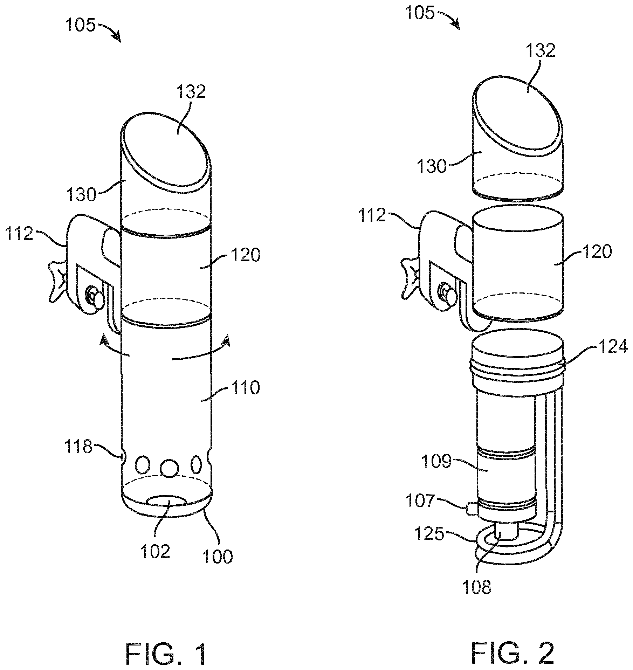

FIGS. 1 and 2 illustrate an example embodiment of a fluidic temperature control device 105. The temperature control device 105 comprises a upper portion 130, a middle portion 120 and a lower portion 110. In at least one embodiment, a fluidic temperature control device can include two portions: an upper and a lower. In at least embodiment, a fluidic temperature control device can include one portion. In at least one embodiment, a fluidic temperature control device can include one or more portions. The upper portion 130 can include a display device 132 which can display information, for example, the temperature of the fluid in which the lower portion 110 is at least partially immersed, the throughput at which intake and ejection ports are operating, or the speed at which an impeller housed within the lower portion is spinning. The upper portion 130 can also include an input device (not shown), for example, one or more buttons or controls which can enable a user to select a temperature for the water in which the lower portion is at least partially immersed. In at least one embodiment, the input device can include physical buttons and/or virtual buttons rendered on display device 132. The buttons or input controls can include capacitive sensor pads. The middle portion 120 can comprise a ring clamp 112 enabling attachment of control device 105 to a container, or the like. Middle portion 120 can include housing 124 for motor and heater base (not shown). Lower portion 110 can be configured with a cap 100 configured with one or more openings 102. Lower portion 110 can enclose submersible pump 109 with one or more liquid intake ports 107 and ejection ports 108. Alternatively, ports 108 can be fluid ejection ports and ports 107 can be fluid intake ports. The lower portion 110 can be configured with liquid intake (flow-in) openings 118 through which the heated water can be drawn by submersible pump 109, an impeller or other agitation device located within the lower portion 110 and ejected out of lower portion 110 through liquid ejection (flow-out) openings 102. Alternatively, openings 118 can be liquid output (flow-out) openings and openings 102 can be liquid intake (flow-in) openings. The lower portion 110 can included a thermometer device for taking the temperature of the fluid in which it is immersed. In another embodiment the thermometer can be separate device 105 and in wireless communication with device 105.

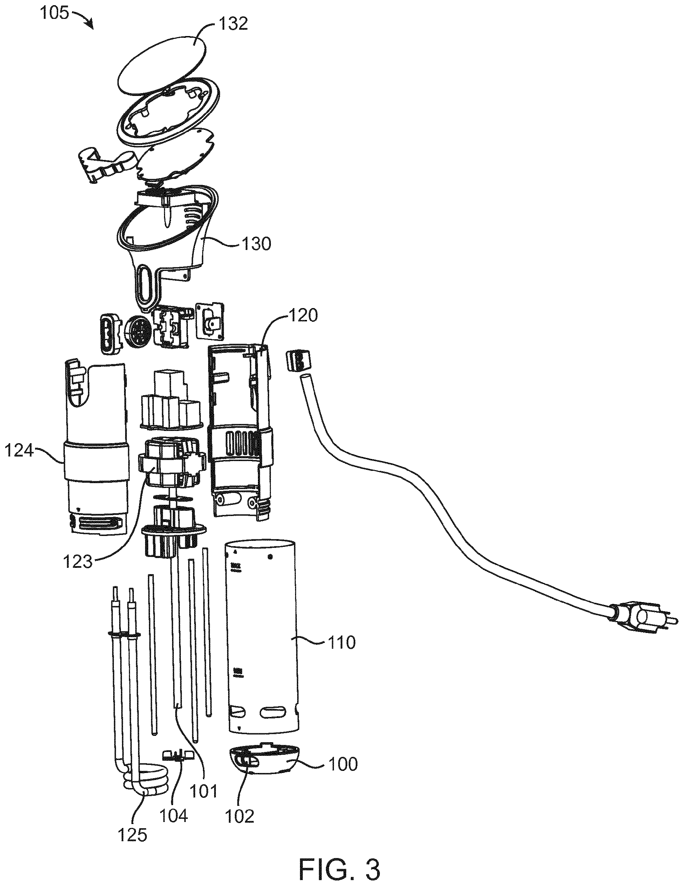

FIG. 3 illustrates components of at least one embodiment of a fluidic temperature control device 105. The device can include a lower portion 110. The lower portion 110 can be a removable, tool-less screw or clamp-on circulator pump other agitation device housing. Lower portion 110 can include heaters 125, drive shaft 101 and impeller 104 .The lower portion 110 can be composed of stainless steel or other suitable materials. In one embodiment, the lower portion 110 can be a removable clamp-on on skirt. The lower portion 110 can be configured with one or more liquid intake (flow-in) openings 118. Alternatively, openings 118 can be liquid output (flow-out) openings. The device 105 can also include a liquid ejection (flow-out) cap 100 with one or more openings 102 on the side or bottom at the through which fluid can pass (as liquid intake (flow-in) or liquid output (flow-out)). Middle portion 120 can enclose motor and heater base 123 connected to electric heaters 125. Middle portion 120 can also comprise a fan (not shown) to blow out any steam that may be present. Middle portion 120 can include collar 124 including one or more openings to provide ventilation to motor and heater base 123. Device 105 can include an upper portion 130. The upper portion 130 can include a LCD display 132 with touch controls. Device 105 can be sealed against water/air and can be fully submersed for periods of time in the cooking vessel containing the fluid being heated by the device.

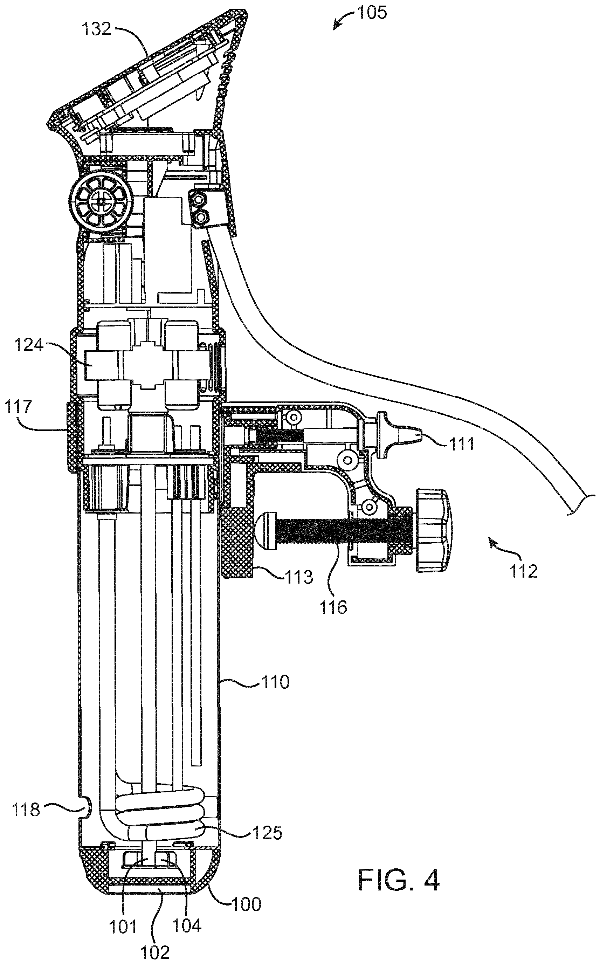

FIG. 4 is a cross-sectional view illustrating an example embodiment of fluidic temperature control device 105 having a clamp 112. The clamp 112 can be configured to releasably secure the fluidic temperature control device 105 to a pot, or any container holding a fluid. The clamp 112 can have a collar 117 and an attachment portion 111 at the uppermost portion of the clamp. The collar 117 can circumferentially engage with device 105 by attachment portion 111. The attachment portion 111 can be spring operated and configured to enable the clamp 112 to attach to the fluidic temperature control device 105. The clamp 112 can further have a stationary engagement portion 113 configured to engage an inner portion of a pot. The clamp 112 can further have a moveable engagement portion 116 configured to engage an outer portion of the pot thereby securing the fluidic temperature control device 105 to the pot. The collar 117 can be positioned at any point along the fluidic temperature control device 105 to enable adjustment in the length of the lower portion 110 that is immersed in fluid of container 114.

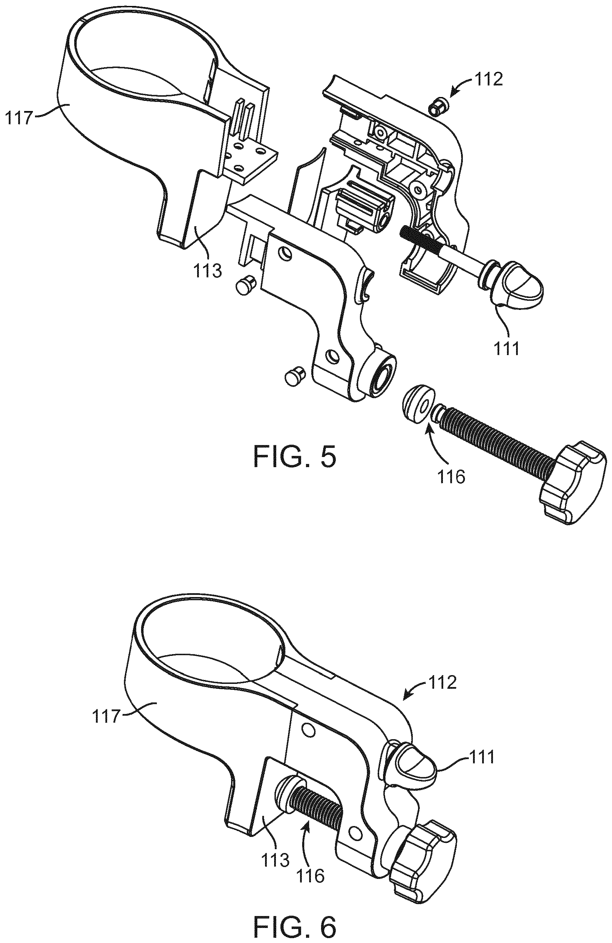

FIG. 5 and FIG. 6 illustrate an exploded view and assembled view of an example clamp 112 respectively. Clamp 112 can include a collar 117 to engage with a temperature control device (not shown). Collar 117 can be engaged by actuating attachment portion 111. Attachment portion 111 can be spring-loaded. When attachment portion 111 is actuated, collar 117 can be engaged with the temperature control device preventing movement of collar 117. Clamp 112 can also include a stationary engagement portion 113. Stationary engagement portion 113 can be configured to engage the inside wall of a container. Clamp 112 can also include a moveable engagement portion 116. Moveable engagement portion 116 can be configured to engage the outside wall of a container. Moveable engagement portion 116 can be actuated by a screw mechanism. In another embodiment, moveable engagement portion 116 can be spring-loaded.

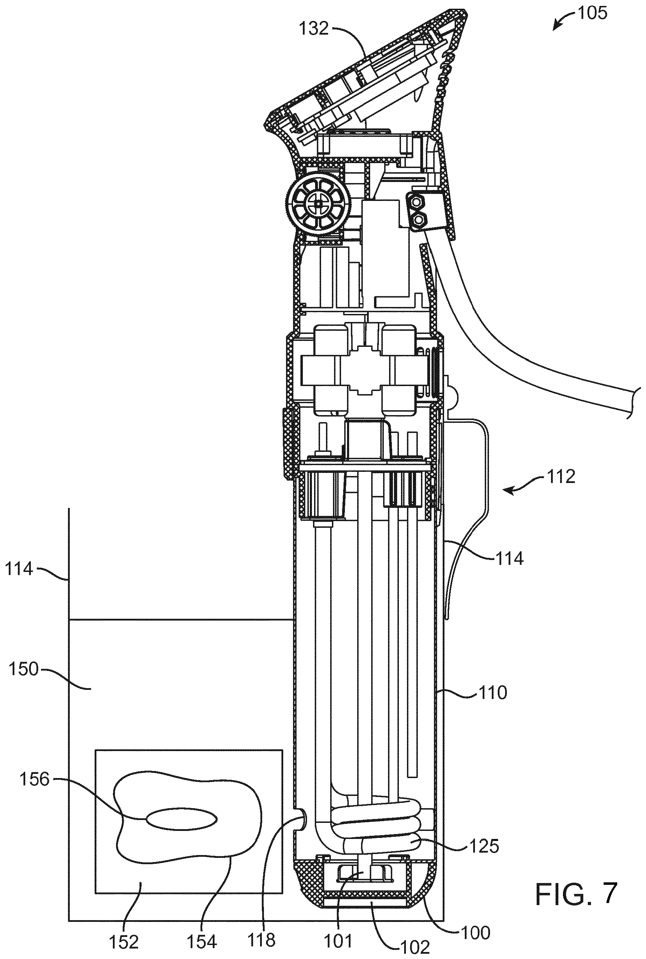

FIG. 7 illustrates an example fluidic temperature control device in communication with a wireless temperature sensor. Device 105 is adjustably attached to container 114 containing fluid 150 (for example water). The temperature of fluid 150 can be regulated by device 105, as previously described. The wireless temperature sensor 156 can be placed proximate (or within) the food 154 within a sealed container 152 (for example, a plastic bag or plastic envelope) located in fluid 150. In another embodiment, the temperature sensor can be wired to and located at fluidic temperature control device 105.

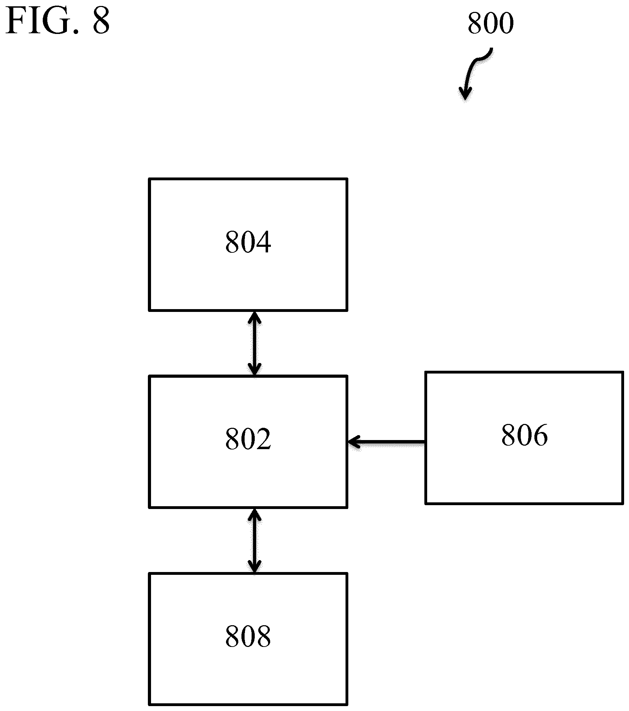

FIG. 8 illustrates a block diagram of an example fluidic temperature control device for sous-vide cooking. Fluidic temperature control device 800 can include a processor 802, one or more storable non-volatile flash memory 804, one or more batteries 806 for internal clock and processor operation under loss of power conditions coupled to the processor, and communication module 808, for example, by a wireless or wired communication connected to the processor.

In at least one embodiment, the processor 802 can monitor and store one or more device events that occur during start-up, operation, and shut-down of fluidic temperature control device 800. In at least one embodiment, the type of events can be an operational event, a warning event, an error event, an informational event, a power-on event, or a power-off event. For example, a power-off event can include loss of power or a user initiated power-off; a power-on event can be a user initiated power-on or a self-restart power-on; a warning or error event can be a drop or rise in temperature past a threshold temperature, a specific amount of time outside of a temperature range, a loss of water below a threshold amount, an overheating event; an operational event can be a heartbeat, current operational status, or historical operation statuses; an informational event can be software updates, new recipes available, downloads available. There can also be user determined or initiated events.

In at least one embodiment, an event, at device 800, can trigger an alert or notification. In at least one embodiment, processor 802 can notify users of a loss of power condition by an audible or visual alert on the device 800. In at least one embodiment, processor 802 can notify users of a loss of power condition by transmitting a notification or alert by communication module 808. In at least one embodiment, the processor can transmit/receive by communication module 808 one or more events to be compared with one or more remote data arrays located on a remote device to determine appropriate actions to be performed at the fluidic temperature control device 800. For example, in a loss of power condition, the communication module can transmit an event to be compared to at the remote device and can receive a self-restart action from the remote device. In at least one embodiment, the processor can transmit an event and receive one or more remote data arrays in response to the event. The processor can be configured to perform a comparison between the event and the received data arrays in order to determine an appropriate action to be performed at the fluidic temperature control device 800. In at least one embodiment, the processor can compare an event to one or more local data arrays to determine an appropriate action to be performed.

In at least one embodiment, communication module 808 can transmit a request to a remote device requesting available updates. The remote device can determine if an update is available and transmit the update if available. For example, periodically an information event can be triggered to check for software updates. Upon receipt of the available update, the information event can be triggered to notify the user by rendering a message on the display of the device. In at least one embodiment, an error event can occur, for example temperature outside threshold. The processor can transmit to the remote device an error code specific to the event. The error code specific to the event could be a malfunction or error with the heating unit. The remote device can determine, based on the received information, for example, error event and/or error code, an appropriate action. Upon receipt of the appropriate action at the device an event can be triggered to notify or alert the user by rendering a message on the display, an audible alert from the display, or transmitting a message to a user's remote device.

In at least one embodiment, the processor 802, memory 804, and communication module 808 can still operate under loss of power conditions by using battery 806. For example, the processor 802 and the communication module 808 can store one or more events, transmit one or more events and receive appropriate action in response to transmitting one or more events while receiving power from battery 806.

In at least one embodiment, the processor 802 can be programmed with one or more preset temperature safety limits for specific foods. The preset temperature can be compared to actual cooking temperature data to determine if appropriate action is required, for example a reset of fluidic temperature control device 800. In at least one embodiment, the processor 802 can determine to restart the fluidic temperature control device 800 once power has restored to the device after an event, for example a power loss event or an abnormal stoppage event. Processor 802 can determine to restart the device 800 in response to a comparison with device events, stored data array and preprogrammed safety limits. In at least one embodiment, the fluidic temperature control device can re-calculate a time to complete cooking the food after a power loss event or an abnormal stoppage event.

In at least one embodiment, the processor 802 can calculate estimated heat-up times and cool-down times of device 800. Warning or error events can be generated based on the calculated times by using heat capacity, calculated heat-up times or user defined temperature danger points in comparison with current or expected measurements. In response to determining a current or expected measurements are outside a threshold of the calculated times, the processor 802 can transmit a notification or alert users by rendering a message on the display or the device, an audible alarm, or a push notification. In at least one embodiment, the memory 804 can contains one or more arrays of temperature cook times to be compared with actual cook time data and generate an event to notify a user of the device of a deviation outside of the threshold.

In at least one embodiment, the fluidic temperature control device 800 can include a user activated child/unintentional tamper proof feature that can lock the device 800 and require the device to be unlocked in order to change fluidic temperature control device settings.

Various embodiments within this disclosure can be implemented in a wide variety of operating environments, which in some cases can include one or more user computers, computing devices, or processing devices which can be used to operate any of a number of applications. User or client devices can include any of a number of general purpose personal computers, such as desktop or laptop computers running a standard operating system, as well as cellular, wireless, and handheld devices running mobile software and capable of supporting a number of networking and messaging protocols. Such a system also can include a number of workstations running any of a variety of commercially-available operating systems and other known applications for purposes such as development and database management. These devices also can include other electronic devices, such as dummy terminals, thin-clients, gaming systems, and other devices capable of communicating via a network.

Various embodiments also can be implemented as part of at least one service or Web service, such as can be part of a service-oriented architecture. Services such as Web services can communicate using any appropriate type of messaging, such as by using messages in extensible markup language (XML) format and exchanged using an appropriate protocol such as SOAP (derived from the "Simple Object Access Protocol"). Processes provided or executed by such services can be written in any appropriate language, such as the Web Services Description Language (WSDL). Using a language such as WSDL allows for functionality such as the automated generation of client-side code in various SOAP frameworks.

Most embodiments utilize at least one network that would be familiar to those skilled in the art for supporting communications using any of a variety of commercially-available protocols, such as TCP/IP, OSI, FTP, UPnP, NFS, CIFS, and AppleTalk™. The network can be, for example, a local area network, a wide-area network, a virtual private network, the Internet, an intranet, an extranet, a public switched telephone network, an infrared network, a wireless network, and any suitable combination thereof.

In embodiments utilizing a Web server, the Web server can run any of a variety of server or mid-tier applications, including HTTP servers, FTP servers, CGI servers, data servers, Java servers, and business application servers. The server(s) also can be capable of executing programs or scripts in response requests from user devices, such as by executing one or more Web applications that can be implemented as one or more scripts or programs written in any programming language, such as Java®, C, C# or C++, or any scripting language, such as Perl, Python, or TCL, as well as combinations thereof. The server(s) can also include database servers, including without limitation those commercially available from Oracle®, Microsoft®, Sybase®, and IBM®.

The environment can include a variety of data stores and other memory and storage media as discussed above. These can reside in a variety of locations, such as on a storage medium local to (and/or resident in) one or more of the computers or remote from any or all of the computers across the network. In a particular set of embodiments, the information can reside in a storage-area network ("SAN") familiar to those skilled in the art. Similarly, any necessary files for performing the functions attributed to the computers, servers, or other network devices can be stored locally and/or remotely, as appropriate. Where a system includes computerized devices, each such device can include hardware elements that can be electrically coupled via a bus, the elements including, for example, at least one central processing unit (CPU), at least one input device (e.g., a mouse, keyboard, controller, touch screen, or keypad), and at least one output device (e.g., a display device, printer, or speaker). Such a system can also include one or more storage devices, such as disk drives, optical storage devices, and solid-state storage devices such as random access memory ("RAM") or read-only memory ("ROM"), as well as removable media devices, memory cards, flash cards, et

Such devices also can include a computer-readable storage media reader, a communications device (e.g., a modem, a network card (wireless or wired), an infrared communication device, etc.), and working memory as described above. The computer-readable storage media reader can be connected with, or configured to receive, a computer-readable storage medium, representing remote, local, fixed, and/or removable storage devices as well as storage media for temporarily and/or more permanently containing, storing, transmitting, and retrieving computer-readable information. The system and various devices also typically will include a number of software applications, modules, services, or other elements located within at least one working memory device, including an operating system and application programs, such as a client application or Web browser. It should be appreciated that alternate embodiments can have numerous variations from that described above. For example, customized hardware might also be used and/or particular elements might be implemented in hardware, software (including portable software, such as applets), or both. Further, connection to other computing devices such as network input/output devices can be employed.

Storage media and computer readable media for containing code, or portions of code, can include any appropriate media known or used in the art, including storage media and communication media, such as but not limited to volatile and non-volatile, removable and non-removable media implemented in any method or technology for storage and/or transmission of information such as computer readable instructions, data structures, program modules, or other data, including RAM, ROM, EEPROM, flash memory or other memory technology, CD-ROM, digital versatile disk (DVD) or other optical storage, magnetic cassettes, magnetic tape, magnetic disk storage or other magnetic storage devices, or any other medium which can be used to store the desired information and which can be accessed by a system device.

Embodiments of the present disclosure can be provided as a computer program product including a nontransitory machine-readable storage medium having stored thereon instructions (in compressed or uncompressed form) that can be used to program a computer (or other electronic device) to perform processes or methods described herein. The machine-readable storage medium can include, but is not limited to, hard drives, floppy diskettes, optical disks, CD-ROMs, DVDs, read-only memories (ROMs), random access memories (RAMs), EPROMs, EEPROMs, flash memory, magnetic or optical cards, solid-state memory devices, or other types of media/machine-readable medium suitable for storing electronic instructions. Further, embodiments can also be provided as a computer program product including a transitory machine-readable signal (in compressed or uncompressed form). Examples of machine-readable signals, whether modulated using a carrier or not, include, but are not limited to, signals that a computer system or machine hosting or running a computer program can be configured to access, including signals downloaded through the Internet or other networks. For example, distribution of software can be via Internet download.

The various embodiments described above are provided by way of illustration only and should not be construed to limit the scope of the disclosure. For example, the principles herein apply not only to a smart phone device but to other devices capable of receiving communications such as a laptop computer. Those skilled in the art will recognize modifications and changes that may be made using the principles described herein without departing from the scope of the disclosure or the following claims.

## Claims

1. A fluidic temperature control device (105) for sous-vide cooking, the fluidic temperature control device (105) comprising a battery (806) configured to enable operation of the device under a loss of power condition;
**characterized in that** the fluidic temperature control device (105) is configured to be entirely submersed in water without negatively impacting its operation; the fluidic temperature control device (105) comprising:
a communication module (808) configured to transmit information corresponding to the event to a remote device,
a processor (802) configured to generate an event in response to the loss of power condition, and a sealed housing enclosing the processor (802); wherein
the communication module (808) is configured to receive an appropriate action from the remote device; and
the processor (802) is configured to control the device to implement the received appropriate action.

2. The fluidic temperature control device (105) of claim 1, wherein
the processor (802) monitors and stores in a memory one or more events of the device.

3. The fluidic temperature control device (105) of claim 1 or 2, wherein
the processor (802) is configured to control the device to do at least one of the following: render a message on a display of the device, cause the device to utter an audible alarm, and transmit a message via the communication module (808).

4. The fluidic temperature control device (105) of any previous claim, wherein
the processor (802) can be programmed with preset temperature safety limits for specific foods.

5. The fluidic temperature control device (105) of claim 4, wherein
the processor (802) is configured to:
determine that an actual temperature of the liquid at the device is exceeds a threshold of the preset temperature safety limit; and
generate an event upon such determination.

6. The fluidic temperature control device (105) of any previous claim, wherein
the processor (802) calculates a projected time the deviceliquid will be running at a temperature danger point and generates an alert of the project time.

7. The fluidic temperature control device (105) of claim 6, wherein
the projected time can be calculated by an actual temperature of the deviceliquid, estimate heat-up times by heat capacity and calculated cool-down times by heat capacity.

8. The fluidic temperature control device (105) of any previous claim, further comprising:
a memory containing one or more arrays of temperature cook times; the processor (802) configured to compare the arrays of temperature cook times with actual cook time data; and notify user when the arrays of temperature cook time is different than the actual cook time data.

9. The fluidic temperature control device (105) of any previous claim, wherein
the fluidic temperature control device (105) has a user activated tamper proof feature that locks access the fluidic temperature control device settings.

10. The fluidic temperature control device (105) of any previous claim, wherein
the processor (802) restarts the device after the power loss event when a preprogrammed safety limits is exceeded.

11. The fluidic temperature control device (105) of any previous claim, wherein
the processor (802) is configured to restart the device after the power loss event when one or more internal event arrays are determined.

12. The fluidic temperature control device (105) of claim 11, wherein
the processor (802) compares the one or more internal event arrays with one or more event arrays received from the remote device to determine the appropriate action.

13. The fluidic temperature control device (105) of any previous claim, wherein
the fluidic temperature control device (105) will calculate a time to finish cooking after a power loss event

## Patentansprüche

1. Fluidtemperatursteuervorrichtung (105) zum Vakuumgaren, wobei die Fluidtemperatursteuervorrichtung (105) eine Batterie (806) umfasst, die ausgelegt ist, einen Betrieb der Vorrichtung unter einer Stromausfallbedingung zu ermöglichen;
**dadurch gekennzeichnet, dass** die Fluidtemperatursteuervorrichtung (105) ausgelegt ist, ohne negative Beeinflussung ihres Betriebs vollständig in Wasser getaucht zu werden; wobei die Fluidtemperatursteuervorrichtung (105) umfasst:
ein Kommunikationsmodul (808), das ausgelegt ist, eine dem Ereignis entsprechende Information an eine entfernte Vorrichtung zu übertragen,
einen Prozessor (802), der ausgelegt ist, in Reaktion auf die Stromausfallbedingung ein Ereignis zu generieren, und ein den Prozessor (802) umschließendes abgedichtetes Gehäuse; wobei
das Kommunikationsmodul (808) ausgelegt ist, eine geeignete Aktion von der entfernten Vorrichtung zu empfangen; und
der Prozessor (802) ausgelegt ist, die Vorrichtung zu steuern, um die empfangene geeignete Aktion zu implementieren.

2. Fluidtemperatursteuervorrichtung (105) nach Anspruch 1, wobei
der Prozessor (802) ein oder mehrere Ereignisse der Vorrichtung überwacht und in einem Speicher speichert.

3. Fluidtemperatursteuervorrichtung (105) nach Anspruch 1 oder 2, wobei
der Prozessor (802) ausgelegt ist, die Vorrichtung zu steuern, mindestens eines des Folgenden auszuführen: Darstellen einer Nachricht auf einer Anzeige der Vorrichtung, Veranlassen der Vorrichtung, einen akustischen Alarm auszugeben, und Übertragen einer Nachricht über das Kommunikationsmodul (808).

4. Fluidtemperatursteuervorrichtung (105) nach einem der vorhergehenden Ansprüche, wobei
der Prozessor (802) mit voreingestellten Temperatursicherheitsgrenzen für bestimmte Lebensmittel programmiert werden kann.

5. Fluidtemperatursteuervorrichtung (105) nach Anspruch 4, wobei
der Prozessor (802) zu Folgendem ausgelegt ist:
Bestimmen, dass eine tatsächliche Temperatur der Flüssigkeit an der Vorrichtung einen Schwellenwert der voreingestellten Temperatursicherheitsgrenze überschreitet; und
Generieren eines Ereignisses bei einer solchen Bestimmung.

6. Fluidtemperatursteuervorrichtung (105) nach einem der vorhergehenden Ansprüche, wobei
der Prozessor (802) eine veranschlagte Zeit berechnet, die die Vorrichtungsflüssigkeit bei einem Temperaturgefahrenpunkt strömen wird, und eine Meldung der veranschlagten Zeit generiert.

7. Fluidtemperatursteuervorrichtung (105) nach Anspruch 6, wobei
die veranschlagte Zeit mittels einer tatsächlichen Temperatur der Vorrichtungsflüssigkeit, geschätzten Aufheizzeiten mittels Wärmekapazität und berechneten Abkühlzeiten mittels Wärmekapazität berechnet werden kann.

8. Fluidtemperatursteuervorrichtung (105) nach einem der vorhergehenden Ansprüche, ferner umfassend:
einen Speicher, der ein oder mehrere Arrays von Temperaturgarzeiten enthält; wobei der Prozessor (802) ausgelegt ist, die Arrays von Temperaturgarzeiten mit tatsächlichen Garzeitdaten zu vergleichen; und einen Benutzer zu benachrichtigen, wenn sich die Arrays von Temperaturgarzeiten von den tatsächlichen Garzeitdaten unterscheiden.

9. Fluidtemperatursteuervorrichtung (105) nach einem der vorhergehenden Ansprüche, wobei
die Fluidtemperatursteuervorrichtung (105) ein benutzeraktiviertes Manipulationssicherungsmerkmal aufweist, das einen Zugriff auf die Fluidtemperatursteuervorrichtungseinstellungen sperrt.

10. Fluidtemperatursteuervorrichtung (105) nach einem der vorhergehenden Ansprüche, wobei
der Prozessor (802) die Vorrichtung nach dem Stromausfallereignis neu startet, wenn eine vorprogrammierte Sicherheitsgrenze überschritten ist.

11. Fluidtemperatursteuervorrichtung (105) nach einem der vorhergehenden Ansprüche, wobei
der Prozessor (802) ausgelegt ist, die Vorrichtung nach dem Stromausfallereignis neu zu starten, wenn ein oder mehrere interne Ereignisarrays bestimmt werden.

12. Fluidtemperatursteuervorrichtung (105) nach Anspruch 11, wobei
der Prozessor (802) das eine oder die mehreren internen Ereignisarrays mit einem oder mehreren Ereignisarrays vergleicht, die von der entfernten Vorrichtung empfangen wurden, um die geeignete Aktion zu bestimmen.

13. Fluidtemperatursteuervorrichtung (105) nach einem der vorhergehenden Ansprüche, wobei
die Fluidtemperatursteuervorrichtung (105) eine Zeit zum Beenden des Garens nach einem Stromausfallereignis berechnen wird.

## Revendications

1. Dispositif de régulation de température fluidique (105) pour la cuisson sous vide, le dispositif de régulation de température fluidique (105) comprenant une pile (806) configurée pour permettre le fonctionnement du dispositif dans une situation de panne d'alimentation ;
le dispositif de régulation de température fluidique (105) étant **caractérisé en ce qu'**il est configuré pour être entièrement immergé dans l'eau sans que son fonctionnement en soit affecté ; le dispositif de régulation de température fluidique (105) comprenant :
un module de communication (808) configuré pour transmettre à un dispositif distant des informations correspondant à l'événement,
un processeur (802) configuré pour générer un événement en réponse à la situation de panne d'alimentation, et un boîtier étanche renfermant le processeur (802) ;
le module de communication (808) étant configuré pour recevoir une action appropriée depuis le dispositif distant ; et
le processeur (802) étant configuré pour commander au dispositif d'accomplir l'action appropriée reçue.

2. Dispositif de régulation de température fluidique (105) selon la revendication 1, dans lequel
le processeur (802) surveille et enregistre dans une mémoire un ou plusieurs événements du dispositif.

3. Dispositif de régulation de température fluidique (105) selon la revendication 1 ou 2, dans lequel
le processeur (802) est configuré pour commander au dispositif de : rendre un message sur un affichage du dispositif et/ou faire émettre une alarme audible par le dispositif et/ou transmettre un message par le biais du module de communication (808).

4. Dispositif de régulation de température fluidique (105) selon l'une quelconque des revendications précédentes, dans lequel
le processeur (802) est programmable avec des limites de sécurité de température préétablies pour des aliments spécifiques.

5. Dispositif de régulation de température fluidique (105) selon la revendication 4, dans lequel
le processeur (802) est configuré pour :
déterminer qu'une température effective du liquide au niveau du dispositif dépasse un seuil de la limite de sécurité de température préétablie ; et
générer un événement dès cette détermination.

6. Dispositif de régulation de température fluidique (105) selon l'une quelconque des revendications précédentes, dans lequel
le processeur (802) calcule un temps projeté où le liquide du dispositif fonctionnera à un point de danger de température et génère une alerte du temps projeté.

7. Dispositif de régulation de température fluidique (105) selon la revendication 6, dans lequel
le temps projeté est calculable à partir d'une température effective du liquide du dispositif, de temps de réchauffement estimés en fonction de la capacité calorifique et de temps de refroidissement calculés en fonction de la capacité calorifique.

8. Dispositif de régulation de température fluidique (105) selon l'une quelconque des revendications précédentes, comprenant en outre :
une mémoire contenant un ou plusieurs ensembles de temps de cuisson par température ; le processeur (802) étant configuré pour comparer les ensembles de temps de cuisson par température avec des données de temps de cuisson effectives ; et informer un utilisateur lorsque les ensembles de temps de cuisson par température sont différents des données de temps de cuisson effectives.

9. Dispositif de régulation de température fluidique (105) selon l'une quelconque des revendications précédentes,
lequel dispositif de régulation de température fluidique (105) est pourvu d'un élément inviolable activé par l'utilisateur qui bloque l'accès aux paramétrages du dispositif de régulation de température fluidique.

10. Dispositif de régulation de température fluidique (105) selon l'une quelconque des revendications précédentes, dans lequel
le processeur (802) redémarre le dispositif suite à l'événement de panne d'alimentation en cas de dépassement d'une limite de sécurité préprogrammée.

11. Dispositif de régulation de température fluidique (105) selon l'une quelconque des revendications précédentes, dans lequel
le processeur (802) est configuré pour redémarrer le dispositif suite à l'événement de panne d'alimentation en cas de détermination d'un ou de plusieurs ensembles d'événements internes.

12. Dispositif de régulation de température fluidique (105) selon la revendication 11, dans lequel
le processeur (802) compare les un ou plusieurs ensembles d'événements internes à un ou plusieurs ensembles d'événements internes reçus depuis le dispositif distant afin de déterminer l'action appropriée.

13. Dispositif de régulation de température fluidique (105) selon l'une quelconque des revendications précédentes,
lequel dispositif de régulation de température fluidique (105) calculera un temps de fin de cuisson suite à un événement de panne d'alimentation.
